# FASCICULE DE BREVET EUROPEEN

(11) **EP 2 678 531 B1**
(45) Date de publication et mention de la délivrance du brevet: **31.12.2014**
(21) Numéro de dépôt: 12709939.8
(22) Date de dépôt: 20.02.2012
(51) Int. Cl.: F01D 5/30

(54) **Rotor de soufflante et turboréacteur associé**
Fanrotor und zugehöriges Turbostrahltriebwerk
Fan rotor and corresponding turbojet engine

(30) Priorité: 21.02.2011 FR 1151401
(43) Date de publication de la demande: 01.01.2014
(73) Titulaire: Snecma, 75015 Paris (FR)
(72) Inventeur: PERDRIGEON, Christophe, F-77550 Moissy Cramayel Cedex (FR); JABLONSKI, Laurent, F-77550 Moissy Cramayel Cedex (FR); JOLY, Philippe, Gérard, Edmond, F-77550 Moissy Cramayel Cedex (FR)
(74) Mandataire: Ramey, Daniel
(86) Numéro de dépôt international: PCT/FR2012/050357
(87) Numéro de publication internationale: WO 2012/114032

(56) Documents cités:
- EP-A1- 0 091 865
- EP-A1- 1 746 250
- EP-A2- 1 357 254

## Description

La présente invention concerne un rotor de soufflante, en particulier pour une turbomachine.

Le rotor d'une soufflante d'une turbomachine comporte un disque portant à sa périphérie externe des aubes dont les pieds sont engagés dans des rainures sensiblement axiales de la périphérie externe du disque. Les aubes sont retenues radialement sur le disque par coopération de formes de leurs pieds avec les rainures du disque, les pieds d'aubes étant par exemple du type en queue d'aronde. Des plates-formes inter-aubes sont montées sur le disque entre les aubes de soufflante. Le disque est généralement équipé de poireaux d'équilibrage s'étendant radialement vers l'intérieur.

Dans la technique actuelle, les aubes sont maintenues axialement sur le disque par des moyens qui sont montés sur le disque, en amont et en aval des aubes, et qui empêchent les pieds d'aube de se déplacer axialement dans les rainures du disque.

Les moyens de maintien situés en aval des aubes comprennent par exemple au moins un crochet qui est engagé dans des encoches usinées sur les parties d'extrémité aval des pieds d'aube.

Les moyens de maintien situés en amont comprennent par exemple une bague et un flasque annulaire rapportés et fixés sur l'extrémité amont du disque. La bague est montée coaxialement sur le disque et comporte une partie festonnée coopérant avec une partie festonnée correspondante du disque. Le flasque est monté coaxialement sur le disque pour bloquer axialement la bague sur le disque et est immobilisé en rotation par rapport au disque. La périphérie externe du flasque prend appui axialement sur les pieds d'aube pour leur retenue axiale vers l'amont, sa périphérie interne étant appliquée et fixée sur une bride annulaire correspondante du disque. La périphérie externe du flasque comporte en outre des pions d'accrochage des extrémités amont des plates-formes inter-aubes.

Une virole de forme sensiblement tronconique montée sur le disque, en amont des aubes, délimite intérieurement la veine annulaire d'entrée d'air dans la turbomachine. Cette virole comporte au voisinage de son extrémité aval une bride annulaire radialement interne qui est appliquée axialement sur le flasque précité et qui est fixée avec le flasque sur la bride du disque par des boulons.

Un capot tronconique est en outre monté sur la virole précitée, à la partie amont de celle-ci, par l'intermédiaire d'autres boulons, engagés dans des trous des brides du capot et de la virole et qui sont situés radialement à l'intérieur des boulons de fixation de la virole sur le disque.

Une telle structure ne peut pas être utilisée quand la soufflante présente un petit diamètre. En effet, l'espace radial n'est pas suffisant pour loger l'ensemble des boulons et des brides précitées. En particulier, il est difficile de loger les boulons et les brides servant à la fixation du capot sur la virole.

En outre, le disque est fixé à un arbre d'entraînement par l'intermédiaire d'un écrou vissé sur l'arbre. Pour réaliser le montage et le démontage du rotor de soufflante, il est nécessaire de pouvoir accéder axialement à cet écrou avec un outil. Pour cela, l'opérateur doit disposer d'un espace suffisant autour de l'axe central.

Dans le cas où la soufflante est de petit diamètre, la structure décrite ci-dessus de l'art antérieur ne permet pas d'accéder à l'écrou central précité.

Le document EP 1 357 254 divulgue également un rotor de soufflante dont la structure présente un encombrement radial et axial important.

L'invention a notamment pour but d'apporter une solution simple, efficace et économique à ce problème.

A cet effet, elle propose un rotor de soufflante, en particulier pour une turbomachine, comprenant un disque portant des aubes dont les pieds sont engagés dans des rainures sensiblement axiales de la périphérie externe du disque, un capot sensiblement tronconique monté sur le disque en amont des aubes, et des moyens de retenue axiale des aubes sur le disque comportant une bague montée dans une gorge annulaire du disque et formant un appui des pieds des aubes, la bague étant festonnée ou crénelée et coopérant avec un rebord annulaire radial festonnée de la gorge annulaire du disque, et des moyens d'immobilisation en rotation de la bague, comportant un anneau portant au moins une dent axiale insérée dans des parties creuses du rebord du disque et de la bague, cet anneau étant fixé par des vis sur une face radiale amont du disque, caractérisé en ce que l'anneau comporte des oreilles s'étendant radialement vers l'intérieur, formées avec des trous de passage de vis axiales de fixation de l'anneau sur le disque, le capot précité étant fixé sur le disque par des vis axiales passant dans les trous de certaines oreilles de l'anneau.

De cette manière, certaines oreilles de l'anneau sont traversées par des vis servant à la fixation du capot et de l'anneau sur le disque et d'autres oreilles de l'anneau sont traversées par des vis servant uniquement à la fixation de l'anneau sur le disque.

Ces vis sont situées sensiblement sur un même diamètre, de sorte que l'encombrement radial de l'ensemble est réduit. Un espace central suffisamment important peut donc être dégagé pour l'accès à l'écrou de fixation du disque sur l'arbre moteur.

En outre, dans le cas où le capot est réalisé en un matériau léger tel que de l'aluminium, il existe un risque d'arrachage de ce dernier, par exemple en cas d'ingestion d'un oiseau dans la soufflante.

Dans un tel cas, l'arrachage du capot ne peut pas entraîner la désolidarisation de l'anneau et du disque. En effet, l'arrachage du capot n'a pas d'effet sur les vis servant uniquement à la fixation de l'anneau et du disque. On évite ainsi toute sortie de la bague de maintien axial des aubes et donc toute éjection accidentelle d'une ou des aubes de la soufflante.

Selon une autre caractéristique de l'invention, le capot comporte, dans sa partie médiane, un rebord annulaire interne dans lequel sont formés des trous borgnes axiaux débouchant vers l'aval et servant au logement des têtes des vis de fixation de l'anneau sur le disque, et des trous axiaux traversants pour le passage des vis de fixation du capot sur le disque.

De manière avantageuse, un pion d'indexage est monté dans des trous alignés de l'anneau et du disque et comprend une tête amont reçue dans un trou borgne du rebord radial interne du capot.

Le capot peut être équipé de vis d'équilibrage s'étendant radialement et vissées dans des taraudages du capot. Le pion d'indexage permet de garantir que la position angulaire correcte des vis d'équilibrage sur le rotor de soufflante est respectée, en cas de démontage et de remontage du capot.

Selon une possibilité de l'invention, le rebord interne du capot comprend deux trous axiaux traversants taraudés pour le passage de vis d'extraction.

En outre, le capot peut être en métal léger, par exemple en aluminium, et l'anneau peut être en un métal résistant à l'arrachement, par exemple en acier fortement allié.

L'invention concerne en outre un turboréacteur, caractérisé en ce qu'il comporte un rotor de soufflante du type précité.

L'invention sera mieux comprise et d'autres détails, caractéristiques et avantages de celle-ci apparaîtront plus clairement à la lecture de la description qui suit faite à titre d'exemple non limitatif et en référence aux dessins annexés, dans lesquels :
- la figure 1 est une demi-vue schématique partielle en coupe axiale d'une soufflante de turbomachine selon la technique antérieure,
- la figure 2 est une vue à plus grande échelle du détail I₂ de la figure 1,
- les figures 3 et 4 sont des vues en perspective d'une partie d'un rotor de soufflante selon l'invention,
- la figure 5 est une vue en coupe d'une partie du rotor de soufflante selon l'invention, montrant une vis de fixation du capot sur le disque,
- la figure 6 est une vue correspondant à la figure 5, montrant une vis de fixation de l'anneau sur le disque,
- la figure 7 est une vue en coupe d'une partie du rotor de soufflante selon l'invention, montrant un pion d'indexage,
- la figure 8 est vue de l'avant et avec arrachage partiel, du capot et de l'anneau.

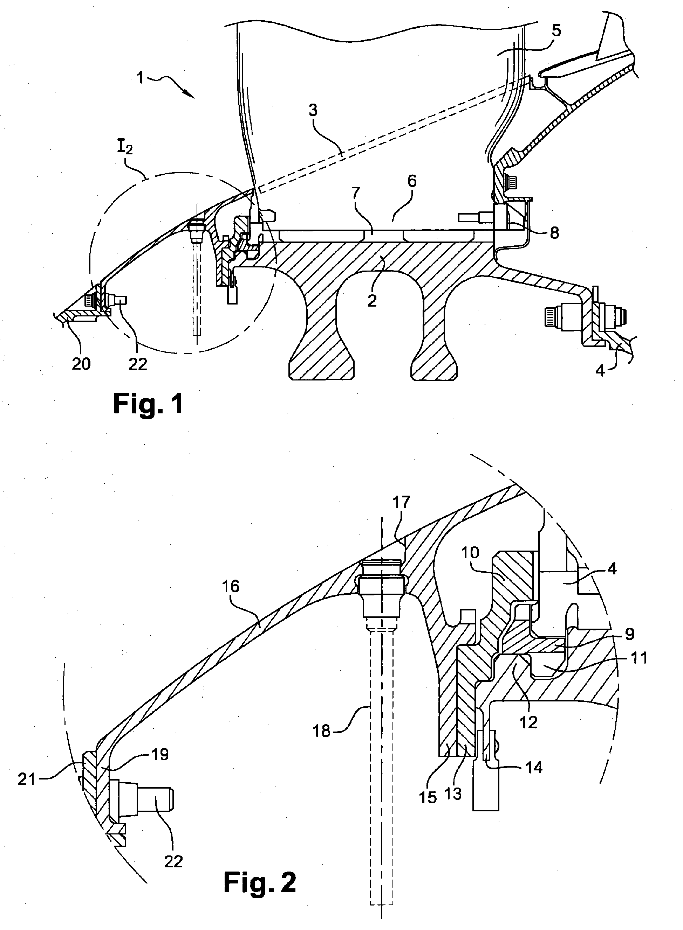

On se réfère d'abord aux figures 1 et 2 qui représentent une soufflante de turbomachine selon la technique antérieure à la présente invention.

Cette soufflante comprend des aubes 1 portées par un disque 2 et entre lesquelles sont intercalées des plates-formes inter-aubes 3, le disque 2 étant fixé à l'extrémité amont d'un arbre 4 de turbomachine.

Chaque aube 1 de soufflante comprend une pale 5 raccordée à son extrémité radialement interne à un pied 6 qui est engagé dans une rainure sensiblement axiale de forme complémentaire du disque 2 permettant de retenir radialement cette aube 1 sur le disque 2. Une cale 7 est intercalée entre le pied 6 de chaque aube 1 et le fond de la rainure correspondante du disque 2 pour immobiliser radialement l'aube 1 sur le disque 2.

Les plates-formes inter-aubes 3 forment une paroi qui délimite intérieurement la veine du flux d'air entrant dans la turbomachine, et comprennent des moyens qui coopèrent avec des moyens correspondants prévus sur le disque 2, entre les rainures, pour fixer les plates-formes 3 sur le disque 2.

Les aubes 1 de soufflante sont retenues axialement dans les rainures du disque 2 par l'intermédiaire de moyens appropriés montés sur le disque 2, en amont et en aval des aubes 1.

Les moyens de retenue situés en aval comprennent un crochet 8 engagé dans une encoche formée par usinage dans une partie d'extrémité aval appelée talon, du pied 6 de chaque aube 1.

Les moyens de retenue situés en amont comprennent une bague 9 et un flasque annulaire 10 rapportés et fixés coaxialement sur l'extrémité amont du disque 2.

La bague 9 (figure 2) comprend un rebord annulaire interne 11 qui est festonné ou crénelé et qui coopère avec un rebord annulaire externe 12 crénelé ou festonné du disque pour immobiliser axialement la bague 9 sur le disque 2. Cette bague 9 prend appui à sa périphérie externe sur les cales 4 des pieds d'aube.

Le flasque 10 s'étend en amont de la bague 9 et des pieds 6 des aubes 1 de soufflante. Ce flasque 10 comporte à sa périphérie externe des pions (non visibles) d'accrochage des extrémités amont des plateformes inter-aubes 3.

Le flasque 10 comprend en outre une bride annulaire interne 13 qui est intercalée entre une bride annulaire correspondante 14 du disque 2 et une bride annulaire interne 15 d'une virole 16 agencée en amont du disque 2 de soufflante. Les brides 13, 14, 15 comprennent des orifices axiaux de passage de vis ou analogues (non visibles) pour le serrage des brides entre elles.

La virole 16 a une forme sensiblement tronconique s'évasant vers l'aval, la paroi définie par les plates-formes inter-aubes 3 s'étendant dans le prolongement axial de cette virole 16. Cette virole 16 comporte des perçages radiaux 17 pour le montage de vis d'équilibrage 18 ainsi qu'une bride 19 située à son extrémité amont. Un capot 20 (figure 1) de forme conique est monté sur la partie amont de la virole 16. Plus particulièrement, le capot comporte une bride 21 à son extrémité aval, fixée à la bride 19 amont de la virole 16 par l'intermédiaire de vis 22 situés radialement à l'intérieur des vis de fixation (non visibles) de la virole 16 sur le disque 2.

Une telle structure présente les inconvénients décrits plus haut. En particulier, elle ne convient pas à une soufflante ayant un diamètre relativement faible.

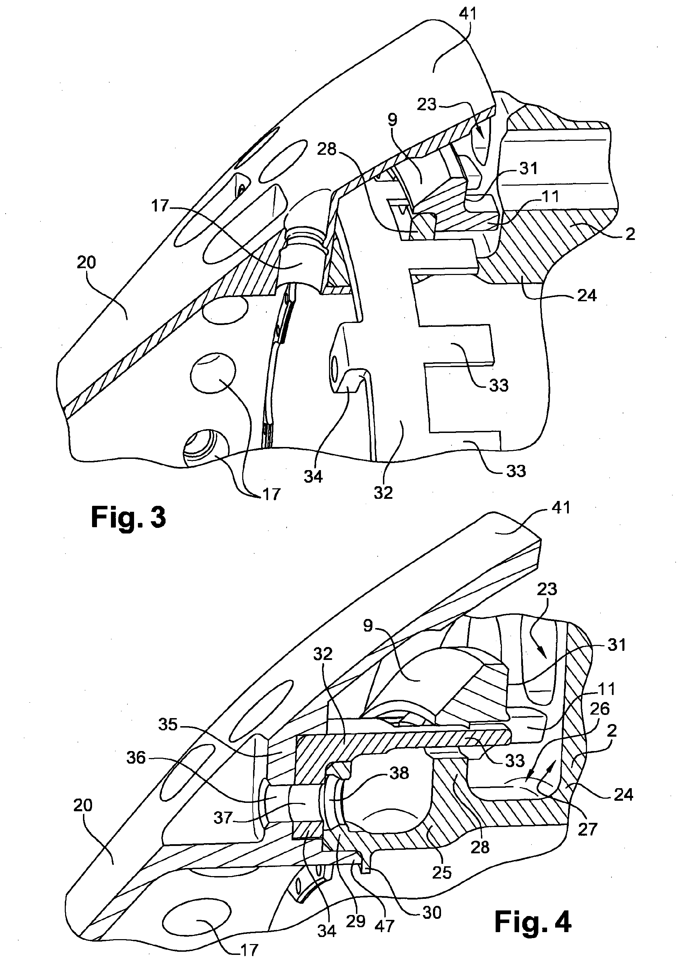

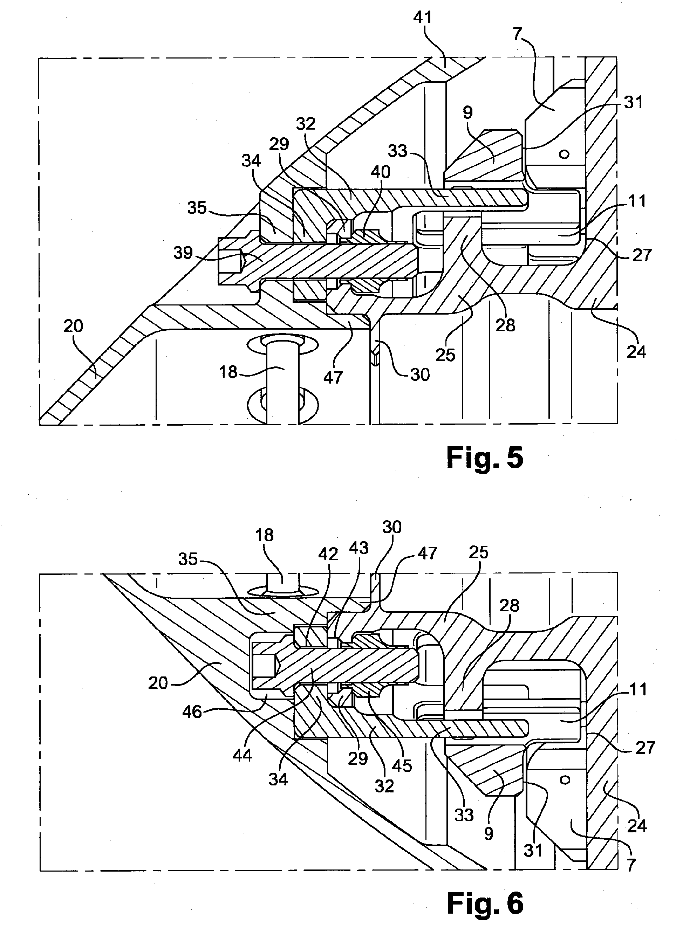

Les figures 3 à 8 illustrent une forme de réalisation d'un rotor de turbine selon l'invention comportant, de la même manière que précédemment, un disque 2 portant des aubes dont les pieds (non représentés) sont engagés dans des rainures 23 sensiblement axiales de la périphérie externe du disque 2, des cales 7 (visibles uniquement aux figures 5 et 6) étant montées entre les pieds des aubes et le fond des alvéoles 23.

Le disque comporte une jante annulaire 24 dépourvue de poireaux d'équilibrage prolongée à l'amont par une partie annulaire 25 comportant une gorge annulaire 26 délimitée entre une face amont 27 de la jante 24 et un rebord radial 28 s'étendant vers l'extérieur. L'extrémité amont de la partie annulaire 25 comporte une bride 29 s'étendant radialement vers l'extérieur et écartée du rebord 28, des butées 30 s'étendant radialement vers l'intérieur étant en outre situées entre le rebord 28 et la bride 29.

Le rebord 28 est festonné ou crénelé et comprend des parties pleines en alternance avec des parties creuses. La bride 29 comporte des trous régulièrement répartis sur toute sa circonférence.

Le rotor de soufflante est équipé de moyens de retenue axiale vers l'amont des aubes sur le disque 2. Ceux-ci comportent une bague 9 montée dans la gorge annulaire 26 du disque 2 et formant un appui des pieds des aubes.

La bague 9 est festonnée ou crénelée à sa périphérie interne 11 et comprend des parties pleines en alternance avec des parties creuses et a des formes sensiblement complémentaires de celles du rebord 28 pour autoriser le montage et le démontage de la bague 9 par translation axiale.

La bague 9 comporte un épaulement annulaire 31 à sa périphérie externe, servant à l'appui des cales 7 de façon à empêcher le déplacement des pieds d'aubes vers l'amont.

La bague 9 comprend enfin un évidement annulaire débouchant vers l'amont et dans lequel est logé le rebord 28 du disque 2.

La bague 9 est immobilisée en rotation au moyen d'un anneau 32 portant des dents 33 axiales insérées dans des parties creuses du rebord 28 du disque 2 et de la bague 9. Le bord amont de l'anneau 32 comporte des oreilles 34 s'étendant radialement vers l'intérieur, formées avec des trous de passage de vis. L'anneau 32 est réalisé en acier fortement allié, de façon à résister à l'arrachement.

La bague 9 est ainsi immobilisée en rotation par butée de ses parties pleines contre les dents 33 de l'anneau 32.

Un capot 20, par exemple en aluminium et de forme conique, est fixé sur le disque 22. Pour cela, le capot 20 comporte, dans sa partie médiane, un rebord annulaire interne 35 dans lequel sont formés des trous axiaux traversants 36 (figure 4), situés en regard de certains trous 37 de l'anneau et de certains trous 38 de la bride 29 du disque 2. Ces trous 36, 37, 38 sont traversés par des vis 39 (figure 5) coopérant avec des écrous 40 logés dans une rainure annulaire de la partie 25 du disque et permettant de fixer ensemble le capot 20, l'anneau 32 et le disque 2. La partie aval 41 du capot 20 recouvre l'anneau 32 et la bague 9 de façon à ce que la veine intérieure définie par les plates-formes inter-aubes s'étende dans le prolongement axial de la partie aval 41 du capot 20.

Comme cela est visible en figure 6, d'autres trous 42 de l'anneau 32, situés en regard d'autres trous 43 de la bride 29 du disque 2, sont traversés par des vis 44 coopérant avec des écrous 45 et servant uniquement à la fixation de l'anneau 32 sur le disque 2. Les têtes de ces vis 44 sont logées dans des trous borgnes 46 ménagés dans le rebord interne 35 du capot 20.

Le rebord interne 35 du capot 20 comprend également une collerette 47 cylindrique s'étendant vers l'amont, dont l'extrémité vient en appui contre les butées 30.

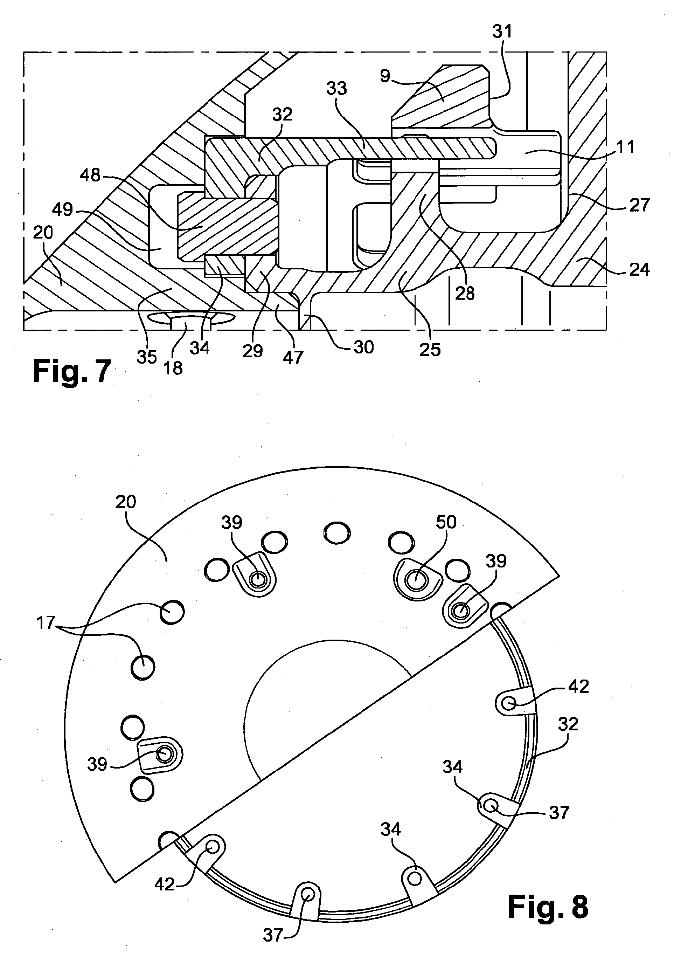

Le capot 20 comporte en outre des filetages radiaux 17 servant au montage de vis d'équilibrage 18, comme cela est bien connu de l'art antérieur. Afin de garantir la bonne position de ces vis 18, il est nécessaire d'indexer la position du capot 20 par rapport au rotor de soufflante. Pour cela, comme représenté à la figure 7, un pion d'indexage 48 est monté dans des trous alignés de l'anneau 32 et de la bride 29 du disque 2. Le pion 48 comporte une tête logée dans un trou borgne 49 du rebord interne 35 du capot 20, le diamètre de la tête du pion 48 étant déterminé de façon à ce qu'il ne puisse pas être inséré dans un autre trou borgne 46, prévu pour le logement des têtes des vis 44.

Le rebord interne 35 du capot 20 comprend en outre deux trous axiaux traversants et taraudés (figure 8) pour le passage de vis d'extraction 50 du capot 20 (figure 8).

L'invention propose donc un rotor de soufflante compact en direction radiale. En effet, comme indiqué précédemment, les vis 39 servant à la fixation du capot 20 sur le disque 2 et les vis 44 servant à la fixation de l'anneau 32 sur le disque 2 sont situées sensiblement sur un même diamètre, de sorte que l'encombrement radial de l'ensemble est réduit. Un espace central suffisamment important peut donc être dégagé pour faciliter l'accès à l'écrou de fixation du disque sur l'arbre moteur.

En outre, en cas d'arrachage du capot 20, on évite toute éjection accidentelle d'une aube. En effet, l'arrachage du capot 20 ne peut pas entraîner la désolidarisation de l'anneau 32 et du disque 2.

## Revendications

1. Rotor de soufflante, en particulier pour une turbomachine, comprenant un disque (2) portant des aubes (1) dont les pieds (6) sont engagés dans des rainures (23) sensiblement axiales de la périphérie externe du disque (2), un capot (20) sensiblement tronconique monté sur le disque (2) en amont des aubes (1), et des moyens de retenue axiale des aubes sur le disque comportant une bague (9) montée dans une gorge annulaire (26) du disque (2) et formant un appui des pieds (6) des aubes (1), la bague (9) étant festonnée ou crénelée et coopérant avec un rebord annulaire radial (28) festonnée de la gorge annulaire (26) du disque (2), et des moyens d'immobilisation en rotation de la bague (9), comportant un anneau (32) portant au moins une dent (33) axiale insérée dans des parties creuses du rebord (28) du disque (2) et de la bague (9), cet anneau (32) étant fixé par des vis (39, 44) sur une face radiale amont (29) du disque (2), l'anneau (32) comportant des oreilles (34) s'étendant radialement vers l'intérieur, formées avec des trous (37, 42) de passage de vis axiales (39, 44) de fixation de l'anneau (32) sur le disque (2), **caractérisé en ce que** le capot précité (20) est fixé sur le disque (2) par des vis (39) axiales passant dans les trous (37) de certaines oreilles (34) de l'anneau (32).

2. Rotor de soufflante selon la revendication 1, **caractérisé en ce que** le capot (20) comporte, dans sa partie médiane, un rebord annulaire interne (35) dans lequel sont formés des trous borgnes axiaux (46) débouchant vers l'aval et servant au logement des têtes des vis (44) de fixation de l'anneau (32) sur le disque (2), et des trous axiaux traversants (36) pour le passage des vis (39) de fixation du capot (20) sur le disque (2).

3. Rotor de soufflante selon la revendication 2, **caractérisé en ce qu'**un pion d'indexage (48) est monté dans des trous alignés de l'anneau (32) et du disque (2) et comprend une tête amont reçue dans un trou borgne (49) du rebord radial interne (35) du capot (20).

4. Rotor de soufflante selon la revendication 2 ou 3, **caractérisé en ce que** le rebord interne (35) du capot (20) comprend deux trous axiaux traversants taraudés pour le passage de vis d'extraction (50).

5. Rotor de soufflante selon l'une des revendications 1 à 4, **caractérisé en ce que** le capot (20) est en métal léger, par exemple en aluminium, et l'anneau (32) est en un métal résistant à l'arrachement, par exemple en acier fortement allié.

6. Turboréacteur, **caractérisé en ce qu'**il comporte un rotor de soufflante selon l'une des revendications 1 à 5.

## Patentansprüche

1. Fanrotor, insbesondere für eine Turbomaschine bzw. ein Turbotriebwerk, enthaltend eine Scheibe (2), die Schaufeln (1) trägt, deren Schaufelfüße (6) in im Wesentlichen axial verlaufende Rillen (23) des Außenumfangs der Scheibe (2) eingreifen, eine im Wesentlichen kegelstumpfförmige Kappe (20), die den Schaufeln (1) vorgelagert an der Scheibe (2) montiert ist, sowie Haltemittel zum axialen Festhalten der Schaufeln an der Scheibe, die einen Ring (9) aufweisen, der in einer ringförmigen Nut (26) der Scheibe (2) montiert ist und eine Abstützung für die Schaufelfüße (6) der Schaufeln (1) bildet, wobei der Ring (9) gewellt bzw. geriffelt ist und mit einer radial verlaufenden, ringförmigen, gewellten Randleiste (28) der ringförmigen Nut (26) der Scheibe (2) zusammenwirkt, und Mittel zur Drehsicherung des Rings (9), die einen Ring (32) aufweisen, der zumindest einen axial verlaufenden Zahn (33) aufweist, der in Hohlbereiche der Randleiste (28) der Scheibe (2) und des Rings (9) eingesetzt ist, wobei dieser Ring (32) über Schrauben (39, 44) an eine radiale, stromaufwärtige Seite (29) der Scheibe (2) befestigt ist, wobei der Ring (32) Lappen (34) aufweist, die sich radial nach innen erstrecken und mit Bohrungen (37, 42) zum Durchtritt von axialen Schrauben (39, 44) zum Befestigen des Rings (32) an die Scheibe (2) ausgebildet sind, **dadurch gekennzeichnet, dass** das die vorgenannte Kappe (20) über axiale Schrauben (39), die in die Bohrungen (37) von bestimmten Lappen (34) des Rings (32) eingreifen, an die Scheibe (2) befestigt ist.

2. Fanrotor nach Anspruch 1, **dadurch gekennzeichnet, dass** die Kappe (20) in ihrem mittleren Abschnitt eine innere, ringförmige Randleiste (35) aufweist, in welcher axiale Sacklochbohrungen (46) ausgeführt sind, die stromabwärts ausmünden und zur Aufnahme der Köpfe der Schrauben (44) zum Befestigen des Rings (32) an die Scheibe (2) dienen, sowie axial verlaufende, durchgehende Bohrungen (36) für den Durchtritt der Schrauben (39) zum Befestigen der Kappe (20) an die Scheibe (2).

3. Fanrotor nach Anspruch 2, **dadurch gekennzeichnet, dass** ein Indexierungszapfen (48) in den fluchtenden Bohrungen des Rings (32) und der Scheibe (2) montiert ist und einen stromaufwärtigen Kopf aufweist, der in einer Sacklochbohrung (49) der radialen, inneren Randleiste (35) der Kappe (20) aufgenommen ist.

4. Fanrotor nach Anspruch 2 oder 3, **dadurch gekennzeichnet, dass** die innere Randleiste (35) der Kappe (20) zwei axial verlaufende, durchgehende Gewindebohrungen für den Durchtritt von Abziehschrauben (50) aufweist.

5. Fanrotor nach einem der Ansprüche 1 bis 4, **dadurch gekennzeichnet, dass** die Kappe (20) aus Leichtmetall besteht, beispielsweise aus Aluminium, und der Ring (32) aus einem reißfestem Metall besteht, beispielsweise aus hochlegiertem Stahl.

6. Turbomaschine bzw. Turbotriebwerk, **dadurch gekennzeichnet, dass** sie bzw. es einen Fanrotor nach einem der Ansprüche 1 bis 5 aufweist.

## Claims

1. A fan rotor in particular for a turbine engine, the rotor comprising a disk (2) carrying blades (1) having roots (6) engaged in substantially axial slots (23) in the outer periphery of the disk (2), a substantially frustoconical cap (20) mounted on the disk (2) upstream from the blades (1), and retaining means for axially retaining the blades on the disk and comprising a ring (9) mounted in an annular groove (26) of the disk (2) and forming an abutment for the roots (6) of the blades (1), the ring (9) being festooned or crenellated and cooperating with a festooned radial annular bead (28) of the annular groove (26) of the disk (2), and means for preventing the ring (9) from moving in rotation, which means comprise an annulus (32) carrying at least one axial tooth (33) inserted in hollow portions of the bead (28) of the disk (2) and of the ring (9), the annulus (32) being fastened by bolts (39, 44) on an upstream radial face (29) of the disk (2), the rotor being **characterized in that** the annulus (32) includes lugs (34) extending radially inwards and formed with holes (37, 42) for passing axial bolts (39, 44) for fastening the annulus (32) on the disk (2), the above-mentioned cap (20) being fastened on the disk (2) by axial bolts (39) passing through the holes (37) in some of the lugs (34) of the ring (32).

2. A fan rotor according to claim 1, **characterized in that**, in its middle portion, the cap (20) includes an inner annular bead (35) having both blind axial holes (46) formed therein that open out downstream and that serve as housings for heads of the bolts (44) for fastening the annulus (32) on the disk (2), and also through axial holes (36) for passing bolts (39) for fastening the cap (20) on the disk (2).

3. A fan rotor according to claim 2, **characterized in that** an indexing peg (48) is mounted in the aligned holes in the annulus (32) and in the disk (2) and includes an upstream head received in a blind hole (49) in the inner radial bead (35) of the cap (20).

4. A fan rotor according to claim 2 or claim 3, **characterized in that** the inner bead (35) of the cap (20) has two through axial holes that are tapped for passing extractor screws (50).

5. A fan rotor according to any one of claims 1 to 4, **characterized in that** the cap (20) is made of light metal, e.g. of aluminum, and the annulus (32) is made of metal that withstands being torn away, e.g. high alloy steel.

6. A turbojet, **characterized in that** it includes a fan rotor according to any one of claims 1 to 5.
